# EUROPEAN PATENT APPLICATION

(11) **EP 4 817 933 A1**
(43) Date of publication of application: **07.10.2026**
(21) Application number: 24896112.0
(22) Date of filing: 25.10.2024
(51) Int. Cl.: B60L 15/20

(54) **VEHICLE CONTROL METHOD, VEHICLE AND COMPUTER-READABLE STORAGE MEDIUM**

(30) Priority: 29.11.2023 CN 202311617705
(71) Applicant: Great Wall Motor Company Limited, Baoding, Hebei 071000 (CN)
(72) Inventor: MA, Shaochong, Baoding, Hebei 071000 (CN); JIA, Guanyong, Baoding, Hebei 071000 (CN); JIA, Jubin, Baoding, Hebei 071000 (CN); GUO, Jiawei, Baoding, Hebei 071000 (CN)
(74) Representative: Klunker IP Patentanwälte PartG mbB
(86) International application number: PCT/CN2024/127489
(87) International publication number: WO 2025/113020

(57) **Abstract**

The present application provides a vehicle control method, a vehicle, and a computer-readable storage medium, relating to the field of vehicle technology. The method is applied to a vehicle equipped with four-wheel steering and independent front and rear axle drive, including: controlling front wheels and rear wheels to steer in a same direction to respective target steering angles in response to an in-place steering mode of the vehicle being activated; controlling front and rear drive motors to output torque having the same magnitude and opposite directions; acquiring a lateral acceleration and a longitudinal acceleration of the vehicle; determining a magnitude relation between the lateral acceleration and a preset acceleration threshold and a magnitude relation between the longitudinal acceleration and the preset acceleration threshold; and adjusting, based on the magnitude relation, the torque output by the front and rear drive motors, steering angles of the front and rear wheels, and a yaw rate of the vehicle, until longitudinal forces on the front and rear axles in a longitudinal direction and a second longitudinal force on the rear axle in the longitudinal direction are equal in magnitude and opposite in direction, and a couple is formed with transverse forces acting on the front and rear axes in the lateral direction. The present application may achieve in-place steering of the vehicle, solving the problem of difficulty in making a U-turn on narrow roads.

## Description

### CROSS-REFERENCE TO RELATED DISCLOSURE

This application claims priority to Chinese Patent Application No. 2023116177053, filed with the China National Intellectual Property Administration on November 29, 2023, and entitled "Vehicle Control Method, Vehicle, and Computer-Readable Storage Medium," the entire contents of which are incorporated herein by reference.

### TECHNICAL FIELD

The present application relates to the field of vehicle technologies, and in particular, to a vehicle control method, a vehicle, and a computer-readable storage medium in the field of vehicle technologies.

### BACKGROUND

With the rapid development of the social economy, automobiles have entered numerous households and become an essential travel tool in daily life, leading to an increasing number of vehicles on the road. When a user drives a vehicle to make a U-turn on a narrow road, the user has always faced the difficulty of performing a U-turn in a narrow space. The U-turn on a narrow road is not only cumbersome to operate but also easily causes the vehicle to be scratched, greatly reducing the convenience of driving and the driving experience for the user.

### SUMMARY

The present application provides a vehicle control method, a vehicle, and a computer-readable storage medium. The present application not only enables in-place steering of the vehicle, solving a problem of difficulty in making a U-turn on a narrow road, but also can reduce a turning radius of the vehicle in an off-road scenario, improving a traversal speed of the vehicle.

In a first aspect, a vehicle control method is provided. The vehicle includes a front axle, a rear axle, a front drive motor for driving the front axle, and a rear drive motor for driving the rear axle. The control method includes: controlling front wheels and rear wheels to steer in a same direction to respective target steering angles in response to an in-place steering mode of the vehicle being activated; controlling the front drive motor to output a first torque and controlling the rear drive motor to output a second torque; where the first torque and the second torque have the same magnitude and opposite directions; acquiring a lateral acceleration and a longitudinal acceleration of the vehicle; determining a magnitude relation between the lateral acceleration and a preset acceleration threshold and a magnitude relation between the longitudinal acceleration and the preset acceleration threshold; and adjusting, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple.In the above technical solution, the vehicle control method provided by the embodiments of the present application is applied to a vehicle model equipped with four-wheel steering and independent front and rear axle drive. By adopting the technical solution, including: controlling front wheels and rear wheels to steer in a same direction to respective target steering angles in response to an in-place steering mode of the vehicle being activated; controlling the front drive motor to output a first torque and controlling the rear drive motor to output a second torque; where the first torque and the second torque have the same magnitude and opposite directions; acquiring a lateral acceleration and a longitudinal acceleration of the vehicle; determining a magnitude relation between the lateral acceleration and a preset acceleration threshold and a magnitude relation between the longitudinal acceleration and the preset acceleration threshold; and adjusting, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple, the in-place steering of the vehicle can be automatically achieved. This allows for safe U-turns and turns on narrow roads, helps reduce a turning radius of the vehicle, alleviates road congestion to a certain extent, improves a traversal speed of the vehicle, and does not require user operation of the vehicle during U-turns or turns, thereby reducing the complexity of vehicle control. This not only enhances the sense of sophistication of the vehicle and the ease of operation but also improves the user's driving pleasure and contributes to a more relaxed driving mood.

In one possible implementation, the adjusting, based on the magnitude relation, the first torque, the second torque, the steering angle of the front wheels, the steering angle of the rear wheels, and the yaw rate of the vehicle includes: reducing the first torque and increasing the second torque until the longitudinal acceleration reaches the preset acceleration threshold in response to the magnitude relation being that both the lateral acceleration and the longitudinal acceleration are greater than a preset acceleration threshold; reacquiring the lateral acceleration in response to the longitudinal acceleration reaching the preset acceleration threshold; determining whether a re-acquired lateral acceleration reaches the preset acceleration threshold to obtain a first determination result; performing torque control on the front drive motor and the rear drive motor based on the first determination result, and performing steering angle control on the front wheels and the rear wheels based on the first determination result, until an absolute value of the first longitudinal force is the same as an absolute value of the second longitudinal force, and an absolute value of the first lateral force is the same as an absolute value of the second lateral force; determining whether the yaw rate reaches a preset angular velocity; and if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

In one possible implementation, the performing torque control on the front drive motor and the rear drive motor based on the first determination result, and performing steering angle control on the front wheels and the rear wheels based on the first determination result includes: controlling the front drive motor to continuously output a reduced first torque, controlling the rear drive motor to continuously output an increased second torque, and maintaining the steering angles of the front wheels and the rear wheels unchanged in response to the first determination result being that the lateral acceleration reaches the preset acceleration threshold; adjusting the first torque, the second torque, and the steering angles of the front wheels and the rear wheels until the lateral acceleration reaches the preset acceleration threshold in response to the first determination result being that the lateral acceleration fails to reach the preset acceleration threshold.

In one possible implementation, the adjusting, based on the magnitude relation, the first torque, the second torque, the steering angle of the front wheels, the steering angle of the rear wheels, and the yaw rate of the vehicle includes: increasing the steering angles of the front wheels and the rear wheels, and reducing the first torque and the second torque, until an absolute value of the first longitudinal force is the same as an absolute value of the second longitudinal force, and an absolute value of the first lateral force is the same as an absolute value of the second lateral force in response to the magnitude relation being that the longitudinal acceleration is greater than the preset acceleration threshold and the lateral acceleration reaches the preset acceleration threshold; determining whether the yaw rate reaches a preset angular velocity; and if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

In one possible implementation, the adjusting, based on the magnitude relation, the first torque, the second torque, the steering angle of the front wheels, the steering angle of the rear wheels, and the yaw rate of the vehicle includes: increasing the steering angle of the front wheels and reducing the steering angle of the rear wheels until the longitudinal acceleration reaches the preset acceleration threshold in response to the magnitude relation being that the longitudinal acceleration is greater than the preset acceleration threshold and the lateral acceleration is less than the preset acceleration threshold; reacquiring the lateral acceleration in response to the longitudinal acceleration reaching the preset acceleration threshold; determining whether a re-acquired lateral acceleration reaches the preset acceleration threshold to obtain a second determination result; performing torque control on the front drive motor and the rear drive motor based on the second determination result, and performing steering angle control on the front wheels and the rear wheels based on the second determination result, until an absolute value of the first longitudinal force is the same as an absolute value of the second longitudinal force, and an absolute value of the first lateral force is the same as an absolute value of the second lateral force; determining whether the yaw rate reaches a preset angular velocity; and if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

According to the first aspect, the performing torque control on the front drive motor and the rear drive motor based on the second determination result, and performing steering angle control on the front wheels and the rear wheels based on the second determination result includes: maintaining output torques of the front drive motor and the rear drive motor unchanged, maintaining an increased steering angle of the front wheels unchanged and maintaining a decreased steering angle of the rear wheels unchanged in response to the second determination result being that the lateral acceleration reaches the preset acceleration threshold; and adjusting the first torque, the second torque, and the steering angles of the front wheels and the rear wheels until the lateral acceleration reaches the preset acceleration threshold in response to the second determination result being that the lateral acceleration fails to reach the preset acceleration threshold.

In one possible implementation, the adjusting, based on the magnitude relation, the first torque, the second torque, the steering angle of the front wheels, the steering angle of the rear wheels, and the yaw rate of the vehicle includes: determining whether the yaw rate reaches a preset angular velocity in response to the magnitude relation being that the longitudinal acceleration reaches the preset acceleration threshold and the lateral acceleration is greater than or less than the preset acceleration threshold; and if not, reducing the first torque and the second torque based on a preset torque adjustment ratio, and reducing the steering angle of the front wheels and the steering angle of the rear wheels based on a preset steering angle adjustment value in response to the yaw rate being greater than the preset angular velocity; or, increasing the first torque and the second torque based on the preset torque adjustment ratio, and increasing the steering angle of the front wheels and the steering angle of the rear wheels based on the preset steering angle adjustment value in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

In one possible implementation, the adjusting, based on the magnitude relation, the first torque, the second torque, the steering angle of the front wheels, the steering angle of the rear wheels, and the yaw rate of the vehicle includes: determining whether the yaw rate reaches a preset angular velocity in response to the magnitude relation being that both the longitudinal acceleration and the lateral acceleration reach the preset acceleration threshold; and if yes, maintaining the first torque and the second torque unchanged, and maintaining the steering angles of the front wheels and the rear wheels unchanged; if not, reducing the first torque and the second torque based on a preset torque adjustment ratio in response to the yaw rate being greater than the preset angular velocity; or, increasing the first torque and the second torque based on the preset torque adjustment ratio in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

In one possible implementation, the adjusting, based on the magnitude relation, the first torque, the second torque, the steering angle of the front wheels, the steering angle of the rear wheels, and the yaw rate of the vehicle includes: reducing the steering angle of the front wheel and increasing the steering angle of the rear wheel in response to the magnitude relation being that the longitudinal acceleration is less than the preset acceleration threshold and the lateral acceleration is greater than the preset acceleration threshold; determining whether an absolute value of the first longitudinal force is the same as an absolute value of the second longitudinal force and an absolute value of the first lateral force is the same as an absolute value of the second lateral force; if yes, maintaining the respective output torques of the front drive motor and the rear drive motor unchanged, maintaining a reduced steering angle of the front wheel unchanged, and maintaining an increased steering angle of the rear wheels unchanged; if not, adjusting the first torque, the second torque, and the steering angles of the front wheels and the rear wheels until the absolute value of the first longitudinal force is the same as the absolute value of the second longitudinal force, and the absolute value of the first lateral force is the same as the absolute value of the second lateral force; determining whether the yaw rate reaches a preset angular velocity; and if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

In one possible implementation, the adjusting, based on the magnitude relation, the first torque, the second torque, the steering angle of the front wheels, the steering angle of the rear wheels, and the yaw rate of the vehicle includes: reducing the steering angle of the front wheels and increasing the first torque, or increasing the steering angle of the rear wheels and reducing the second torque in response to the magnitude relation being that the longitudinal acceleration is less than the preset acceleration threshold and the lateral acceleration reaches the preset acceleration threshold until an absolute value of the first longitudinal force is the same as an absolute value of the second longitudinal force, and an absolute value of the first lateral force is the same as an absolute value of the second lateral force; determining whether the yaw rate reaches a preset angular velocity; and if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

In one possible implementation, the adjusting, based on the magnitude relation, the first torque, the second torque, the steering angle of the front wheels, the steering angle of the rear wheels, and the yaw rate of the vehicle includes: increasing the first torque, reducing the steering angle of the front wheels, reducing the second torque, and increasing the steering angle of the rear wheels in response to the magnitude relation being that the longitudinal acceleration is less than the preset acceleration threshold and the lateral acceleration is less than the preset acceleration threshold, until an absolute value of the first longitudinal force is the same as an absolute value of the second longitudinal force, and an absolute value of the first lateral force is the same as an absolute value of the second lateral force; determining whether the yaw rate reaches a preset angular velocity; and if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

In one possible implementation, the controlling the front wheels and the rear wheels to steer in the same direction to respective target steering angles in response to the in-place steering mode of the vehicle being activated includes: acquiring a preset in-place steering direction in response to the in-place steering mode of the vehicle being activated; acquiring a preset steering angle corresponding to the in-place steering direction to obtain the respective target steering angles for the front wheels and the rear wheels; and controlling the front wheels and the rear wheels to steer in the same direction to the respective target steering angles.

In a second aspect, a control device of a vehicle is provided. The vehicle includes a front axle, a rear axle, a front drive motor for driving the front axle, and a rear drive motor for driving the rear axle. The control device includes:
a first control module, configured to control front wheels and rear wheels to steer in a same direction to respective target steering angles in response to an in-place steering mode of the vehicle being activated, and control the front drive motor to output a first torque and controlling the rear drive motor to output a second torque; where the first torque and the second torque have the same magnitude and opposite directions;
an acceleration acquisition module, configured to acquire a lateral acceleration and a longitudinal acceleration of the vehicle;
an acceleration comparison module, configured to determine a magnitude relation between the lateral acceleration and a preset acceleration threshold and a magnitude relation between the longitudinal acceleration and the preset acceleration threshold; and
a second control module, configured to adjust, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple.

In one possible implementation, the second control module is specifically configured to: reduce the first torque and increasing the second torque until the longitudinal acceleration reaches the preset acceleration threshold in response to the magnitude relation being that both the lateral acceleration and the longitudinal acceleration are greater than a preset acceleration threshold; reacquire the lateral acceleration in response to the longitudinal acceleration reaching the preset acceleration threshold; determine whether a re-acquired lateral acceleration reaches the preset acceleration threshold to obtain a first determination result; performing torque control on the front drive motor and the rear drive motor based on the first determination result, and perform steering angle control on the front wheels and the rear wheels based on the first determination result, until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module is specifically configured, in terms of performing torque control on the front drive motor and the rear drive motor and performing steering angle control on the front wheels and the rear wheels based on the first determination result based on the first determination result, to: control the rear drive motor to continuously output an increased second torque, and maintain the steering angles of the front wheels and the rear wheels unchanged in response to the first determination result being that the lateral acceleration reaches the preset acceleration threshold, control the front drive motor to continuously output a reduced first torque; adjust the first torque, the second torque, and the steering angles of the front wheels and the rear wheels until the lateral acceleration reaches the preset acceleration threshold in response to the first determination result being that the lateral acceleration fails to reach the preset acceleration threshold.

In one possible implementation, the second control module is specifically configured to: increase the steering angles of the front wheels and the rear wheels, and reduce the first torque and the second torque, until an absolute value of the first longitudinal force is the same as an absolute value of the second longitudinal force, and an absolute value of the first lateral force is the same as an absolute value of the second lateral force in response to the magnitude relation being that the longitudinal acceleration is greater than the preset acceleration threshold and the lateral acceleration reaches the preset acceleration threshold; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module is specifically configured to: increase the steering angle of the front wheels and decreasing the steering angle of the rear wheels until the longitudinal acceleration reaches the preset acceleration threshold in response to the magnitude relation being that the longitudinal acceleration is greater than the preset acceleration threshold and the lateral acceleration is less than the preset acceleration threshold; reacquire the lateral acceleration in response to the longitudinal acceleration reaching the preset acceleration threshold; determine whether a re-acquired lateral acceleration reaches the preset acceleration threshold to obtain a second determination result; perform torque control on the front drive motor and the rear drive motor based on the second determination result, and perform steering angle control on the front wheels and the rear wheels based on the second determination result, until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module is specifically configured to, maintain output torques of the front drive motor and the rear drive motor unchanged, maintain an increased steering angle of the front wheels unchanged and maintain a decreased steering angle of the rear wheels unchanged in response to the second determination result being that the lateral acceleration reaches the preset acceleration threshold; and adjust the first torque, the second torque, and the steering angles of the front wheels and the rear wheels until the lateral acceleration reaches the preset acceleration threshold in response to the second determination result being that the lateral acceleration fails to reach the preset acceleration threshold.

In one possible implementation, the second control module is specifically configured to: determine whether the yaw rate reaches a preset angular velocity in response to the magnitude relation being that the longitudinal acceleration reaches the preset acceleration threshold and the lateral acceleration is greater than or less than the preset acceleration threshold; and if not, reduce the first torque and the second torque based on a preset torque adjustment ratio, and reduce the steering angle of the front wheels and the steering angle of the rear wheels based on a preset steering angle adjustment value in response to the yaw rate being greater than the preset angular velocity; or, increase the first torque and the second torque based on the preset torque adjustment ratio, and increase the steering angle of the front wheels and the steering angle of the rear wheels based on the preset steering angle adjustment value in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

In one possible implementation, the second control module is specifically configured to: determine whether the yaw rate reaches a preset angular velocity in response to the magnitude relation being that both the longitudinal acceleration and the lateral acceleration reach the preset acceleration threshold; and if yes, maintain the first torque and the second torque unchanged, and maintain the steering angles of the front wheels and the rear wheels unchanged; if not, reduce the first torque and the second torque based on a preset torque adjustment ratio in response to the yaw rate being greater than the preset angular velocity; or, increase the first torque and the second torque based on the preset torque adjustment ratio in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

In one possible implementation, the second control module is specifically configured to: reduce the steering angle of the front wheel and increasing the steering angle of the rear wheel in response to the magnitude relation being that the longitudinal acceleration is less than the preset acceleration threshold and the lateral acceleration is greater than the preset acceleration threshold; determine whether an absolute value of the first longitudinal force is the same as an absolute value of the second longitudinal force and an absolute value of the first lateral force is the same as an absolute value of the second lateral force; if yes, maintain the respective output torques of the front drive motor and the rear drive motor unchanged, maintaining a reduced steering angle of the front wheel unchanged, and maintain an increased steering angle of the rear wheels unchanged; if not, adjust the first torque, the second torque, and the steering angles of the front wheels and the rear wheels until the absolute value of the first longitudinal force is the same as the absolute value of the second longitudinal force, and the absolute value of the first lateral force is the same as the absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module is specifically configured to: reduce the steering angle of the front wheels and increasing the first torque, or increase the steering angle of the rear wheels and reducing the second torque in response to the magnitude relation being that the longitudinal acceleration is less than the preset acceleration threshold and the lateral acceleration reaches the preset acceleration threshold until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module is specifically configured to: increase the first torque, reducing the steering angle of the front wheels, reduce the second torque, and increase the steering angle of the rear wheels in response to the magnitude relation being that the longitudinal acceleration is less than the preset acceleration threshold and the lateral acceleration is less than the preset acceleration threshold, until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the first control module is specifically configured to: acquire a preset in-place steering direction in response to the in-place steering mode of the vehicle being activated; acquire a preset steering angle corresponding to the in-place steering direction to obtain the respective target steering angles for the front wheels and the rear wheels; and control the front wheels and the rear wheels to steer in the same direction to the respective target steering angles.

In a third aspect, a vehicle is provided, including a memory and a processor. The memory is configured to store executable program code, and the processor is configured to call and run the executable program code from the memory, enabling the vehicle to execute the vehicle control method according to the first aspect or any one of the possible implementations of the first aspect.

In a fourth aspect, a computer program product is provided, the computer program product including: computer program code, when the computer program code runs on a computer, the vehicle control method according to the first aspect or any one of the possible implementations of the first aspect is executed by the computer.

In a fifth aspect, a computer-readable storage medium is provided, the computer-readable storage medium storing computer program code, when the computer program code runs on a computer, the vehicle control method according to the first aspect or any one of the possible implementations of the first aspect is executed by the computer.

### BRIEF DESCRIPTION OF THE DRAWINGS

FIG. 1 shows a schematic flowchart of a vehicle control method according to an embodiment of the present application.
FIG. 2 shows an exemplary schematic diagram of a vehicle with four-wheel steering and independent front and rear axle drive.
FIG. 3 shows another exemplary schematic diagram of a vehicle with four-wheel steering and independent front and rear axle drive.
FIG. 4 shows a schematic diagram of a coordinate system regarding lateral and longitudinal acceleration.
FIG. 5 shows still another exemplary schematic diagram of a vehicle with four-wheel steering and independent front and rear axle drive.
FIG. 6 shows yet still another exemplary schematic diagram of a vehicle with four-wheel steering and independent front and rear axle drive.
FIG. 7 shows a schematic structural diagram of a control device of a vehicle according to an embodiment of the present application.
FIG. 8 shows a schematic structural diagram of a control device for a vehicle with four-wheel steering and independent front and rear axle drive according to an embodiment of the present application.

### DETAILED DESCRIPTION OF THE EMBODIMENTS

The technical solutions in the present application will be described clearly and in detail below with reference to the accompanying drawings. In the description of the embodiments of the present application, unless otherwise specified, "/" means "or", for example, A/B may mean A or B: "and/or" in the text is merely a description of the association relationship of associated objects, indicating that three relationships may exist, for example, A and/or B may mean: A exists alone, A and B exist simultaneously, and B exists alone. In addition, in the description of the embodiments of the present application, "plurality" means two or more.

Hereinafter, the terms "first" and "second" are used for descriptive purposes only and cannot be understood as implying or suggesting relative importance or implicitly indicating the number of indicated technical features. Thus, features defined with "first" and "second" may explicitly or implicitly include one or more of these features.

The following is an embodiment of a vehicle control method provided by an embodiment of the present application.

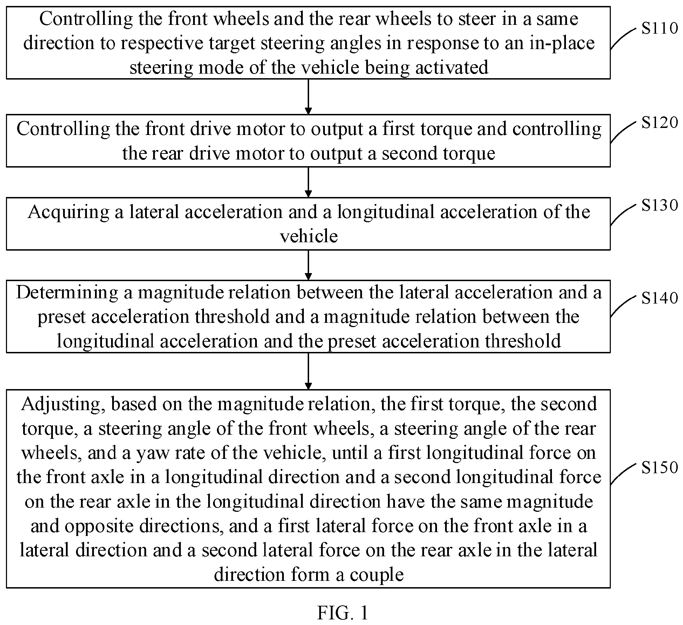

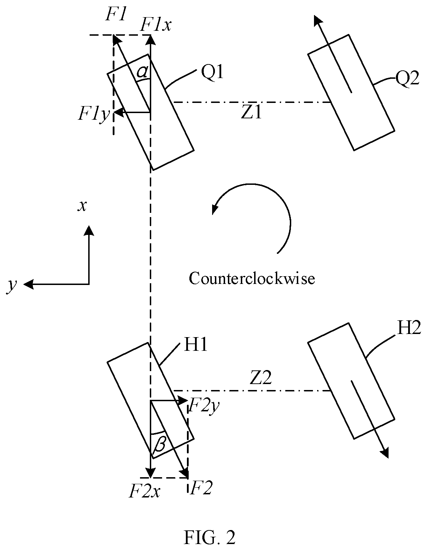

FIG. 1 shows a schematic flowchart of a vehicle control method according to an embodiment of the present application. As shown in FIG. 1, the vehicle control method provided by the embodiment of the present application is applied to a vehicle equipped with four-wheel steering and independent front and rear axle drive. As shown in FIG. 2, FIG. 2 shows an exemplary schematic diagram of a vehicle with four-wheel steering and independent front and rear axle drive. The vehicle includes a front axle Z1, a rear axle Z2, a front drive motor for driving the front axle, and a rear drive motor for driving the rear axle. The front drive motor and the rear drive motor are not shown in FIG. 2. A distance between the front axle Z1 and the center of mass of the vehicle is equal to a distance between the rear axle Z2 and a center of mass of the vehicle. The front wheels of the vehicle include a left front wheel Q1 and a right front wheel Q2, and the rear wheels include a left rear wheel H1 and a rear front wheel H2. The front drive motor drives the front wheels to rotate through the front axle Z1, and the rear drive motor drives the rear wheels to rotate through the rear axle Z2. The vehicle shown in FIG. 2 can independently control steering of the left front wheel Q1, independently control steering of the right front wheel Q2, independently control steering of the left rear wheel H1, and independently control steering of the rear front wheel H2. Alternatively, the vehicle can not only independently control the synchronous steering of the left front wheel Q1 and the right front wheel Q2, but also independently control the synchronous steering of the left rear wheel H1 and the rear front wheel H2.

The above vehicle control method includes the following solutions.

S110: controlling the front wheels and the rear wheels to steer in a same direction to respective target steering angles in response to an in-place steering mode of the vehicle being activated.

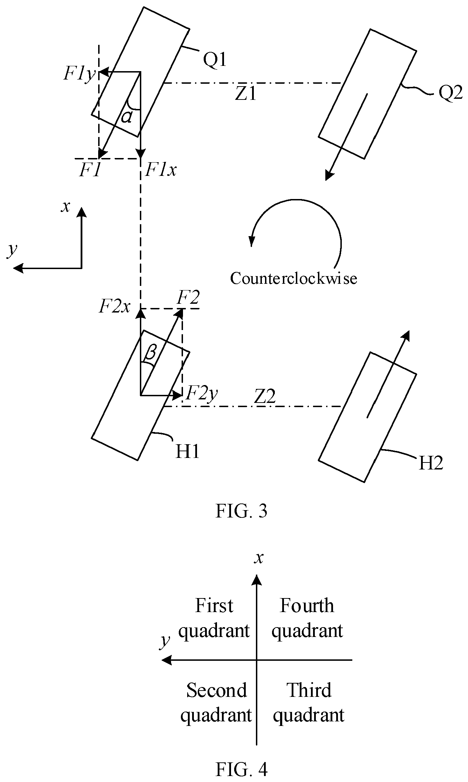

In an exemplary embodiment, if it is detected that the in-place steering mode of the vehicle is activated, it indicates that a user requires the vehicle to turn in place. Thus, the vehicle is controlled to enter a preparation stage for in-place steering, that is, controlling the front wheels and the rear wheels to steer in the same direction to the respective target steering angles. As shown in FIG. 2 and FIG. 3, FIG. 3 shows another exemplary schematic diagram of a vehicle with four-wheel steering and independent front and rear axle drive. FIG. 2 shows controlling the front wheels and the rear wheels to both steer left, with steering angles being the target steering angles. FIG. 3 shows controlling the front wheels and the rear wheels to both steer right, with the steering angles being the target steering angles. The target steering angles are preset, that is, after controlling the front wheels and the rear wheels to steer in the same direction to the respective target steering angles, the steering angle of the front wheels reaches the target steering angle, and the steering angle of the rear wheels reaches the target steering angle. The respective target steering angles for the front wheels and the rear wheels may be the same or different. In FIG. 2 and FIG. 3, α represents the steering angle of the front wheels, and β represents the steering angle of the rear wheels.

S120: controlling the front drive motor to output a first torque and controlling the rear drive motor to output a second torque.

After the front wheels and the rear wheels are controlled to steer in the same direction to the respective target steering angles, that is, when both α and β reach the target steering angles, the front drive motor and the rear drive motor are controlled to rotate. The front drive motor outputs the first torque, and the rear drive motor outputs the second torque. The first torque and the second torque have the same magnitude but opposite directions, that is, a direction in which the front drive motor drives the front wheels to rotate is opposite to a direction in which the rear drive motor drives the rear wheels to rotate. Therefore, a resultant force on the front axle and a resultant force on the rear axle have the same magnitude but opposite directions.

The rotation directions of the front drive motor and the rear drive motor are predefined. When the front drive motor and the rear drive motor rotate forward (counterclockwise), the front and rear wheels rotate forward (counterclockwise), that is, when the front drive motor and the rear drive motor rotate forward, a direction of torque output by the front drive motor and the rear drive motor is counterclockwise, and directions of the resultant force on the front axle and the rear axle are both forward. When the front drive motor and the rear drive motor rotate in reverse (clockwise), the front and rear wheels rotate in reverse (clockwise). Then, the direction of the torque output by the front drive motor and the rear drive motor is clockwise, and the directions of the resultant force on the front axle and the rear axle are both backward. As shown in FIG. 2, when the front drive motor rotates forward, the resultant force on the front axle is called a first resultant force. F1 represents the first resultant force, and the direction of F1 is forward. The rear drive motor rotates in reverse, and the resultant force on the rear axle is called a second resultant force. F2 represents the second resultant force, and the direction of F2 is backward. As shown in FIG. 3, the front drive motor rotates in reverse, and the direction of F1 is backward; the rear drive motor rotates forward, and the direction of F2 is forward.

S130: acquiring a lateral acceleration and a longitudinal acceleration of the vehicle.

When the steering angles of the front wheels and the rear wheels reach the target steering angles and are rotating, the lateral acceleration and the longitudinal acceleration of the vehicle collected by an acceleration sensor are acquired. The lateral acceleration is represented as Ay, and the longitudinal acceleration is represented as Ax.

S140: determining a magnitude relation between the lateral acceleration and a preset acceleration threshold and a magnitude relation between the longitudinal acceleration and the preset acceleration threshold.

The preset acceleration threshold corresponding to Ay is the same as the preset acceleration threshold corresponding to Ax. The preset acceleration threshold is represented as As. After Ay and Ax are acquired, Ax and Ay are compared with As to acquire the magnitude relation. As is generally set to 0.

S150: adjusting, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple. The couple refers to a pair of parallel forces acting on the same rigid body that are equal in magnitude, opposite in direction, and not collinear. In the present application, the couple formed by the first lateral force and the second lateral force acts on the vehicle, that is, the first lateral force and the second lateral force are a pair of parallel forces acting on the vehicle that are equal in magnitude, opposite in direction, and not collinear.

As shown in FIG. 2 and FIG. 3, F1x represents a first longitudinal force on the front axle in the longitudinal direction, also representing a longitudinal component of F1, and F2x represents a second longitudinal force on the rear axle in the longitudinal direction, also representing a longitudinal component of F2. F1y represents a first lateral force on the front axle in the lateral direction, also representing a lateral component of F1, and F2y represents a second lateral force on the rear axle in the lateral direction, also representing a lateral component of F2.

After the magnitude relation is acquired, the first torque, the second torque, the steering angle of the front wheels, the steering angle of the rear wheels, and the yaw rate of the vehicle are adjusted based on the magnitude relation, until F1x and F2x have the same magnitude and opposite directions, and F1y and F2y form a couple. Therein, F1x and F2x have the same magnitude and opposite directions, that is, F1x and F2x can cancel each other out, F1x+F2x=0. In other words, Ax reaches As, and a longitudinal speed of the vehicle is 0. Accordingly, the vehicle does not move in the longitudinal direction. F1y and F2y form a couple. In other words, Ay reaches As, and F1y and F2y are forces with the same magnitude, opposite directions, and parallel to each other. Thus, the vehicle rotates around its own center of mass, achieving in-place steering of the vehicle. The direction of the in-place steering of the vehicle is related to the direction of F1y. If the direction of F1y is left, the direction of the in-place steering of the vehicle is counterclockwise; if the direction of F1y is right, the direction of the in-place steering of the vehicle is clockwise.

The vehicle control method provided by the embodiment of the present application is applied to a vehicle equipped with four-wheel steering and independent front and rear axle drive or a vehicle equipped with front wheel steering, rear wheel steering, and independent front and rear axle drive. By adopting the technical solution, including: controlling front wheels and rear wheels to steer in a same direction to respective target steering angles in response to an in-place steering mode of the vehicle being activated; controlling the front drive motor to output a first torque and controlling the rear drive motor to output a second torque; where the first torque and the second torque have the same magnitude and opposite directions; acquiring a lateral acceleration and a longitudinal acceleration of the vehicle; determining a magnitude relation between the lateral acceleration and a preset acceleration threshold and a magnitude relation between the longitudinal acceleration and the preset acceleration threshold; and adjusting, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple, the in-place steering of the vehicle can be automatically achieved. This allows for safe U-turns and turns on narrow roads, helps reduce a turning radius of the vehicle, alleviates road congestion to a certain extent, improves a traversal speed of the vehicle, and does not require user operation of the vehicle during U-turns or turns, thereby reducing the complexity of vehicle control. This not only enhances the sense of sophistication of the vehicle and the ease of operation but also improves the user's driving pleasure and contributes to a more relaxed driving mood.

Specific implementation methods of each step in the embodiment shown in FIG. 1 are described below.

To facilitate understanding, various parameters involved in the present application are represented by letters, as shown in Table 1:

**Table 1**

| Parameter | Representation | Parameter | Representation | Parameter | Representation |
|---|---|---|---|---|---|
| Steering angle of front wheels | α | Lateral acceleration | Ay | First lateral force | F1y |
| Steering angle of rear wheels | β | Longitudinal acceleration | Ax | First longitudinal force | F1x |
| First torque | Ta | Yaw rate | Vh | Second resultant force | F2 |
| Second torque | Tb | Preset angular velocity | Vd | Second lateral force | F2y |
| Acceleration threshold | As | First resultant force | F1 | Second longitudinal force | F2x |

Therein, reducing α is equivalent to increasing a component force on the front wheels in the longitudinal direction, that is, equivalent to increasing F1x; increasing α is equivalent to reducing a component force on the front wheels in the longitudinal direction, that is, equivalent to reducing F1x. Similarly, reducing β is equivalent to increasing a component force on the rear wheels in the longitudinal direction, that is, equivalent to increasing F2x; increasing β is equivalent to reducing a component force on the rear wheels in the longitudinal direction, that is, equivalent to reducing F2x.

In one possible implementation, the step of adjusting, based on the magnitude relation, the first torque, the second torque, the steering angle of the front wheels, the steering angle of the rear wheels, and the yaw rate of the vehicle includes:
reducing the first torque and increasing the second torque until the longitudinal acceleration reaches the preset acceleration threshold in response to the magnitude relation being that both the lateral acceleration and the longitudinal acceleration are greater than a preset acceleration threshold;
reacquiring the lateral acceleration in response to the longitudinal acceleration reaching the preset acceleration threshold;
determining whether a re-acquired lateral acceleration reaches the preset acceleration threshold to obtain a first determination result;
performing torque control on the front drive motor and the rear drive motor based on the first determination result, and performing steering angle control on the front wheels and the rear wheels based on the first determination result, until an absolute value of the first longitudinal force is the same as an absolute value of the second longitudinal force, and an absolute value of the first lateral force is the same as an absolute value of the second lateral force;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

As shown in FIG. 4, FIG. 4 shows a schematic diagram of a coordinate system for longitudinal acceleration and lateral acceleration, where an x-axis represents a longitudinal acceleration axis and the y-axis represents a lateral acceleration axis. If Ax>0 and Ay>0, it indicates that the vehicle is moving towards a first quadrant, with |F1x|>|F2x| and |F1y|>|F2y|.

For the case of Ax>0 and Ay>0, Ta is reduced and Tb is increased until Ax=0. Therein, Ax=0 may not be achieved with a single adjustment of reducing Ta and increasing Tb. If Ax is not 0 after the first reduction of Ta and increase of Tb, Ta is reduced and Tb is increased continuously until Ax=0.

When Ax=0 is detected, Ay is re-acquired to determine whether Ay is 0 to obtain the first determination result, and then torque control is performed on the front drive motor and the rear drive motor and steering angle control is performed on the front wheels and the rear wheels based on the first determination result, until |F1x|=|F2x| and |F1y|=|F2y|, where |F1x|=|F1cosα|, |F2x|=|F2cosβ|, |F1y|=|F1sinα|, |F2y|=|F2sinβ|. |F1x|=|F2x| and |F1y|=|F2y| means |F1cosα|=|F2cosβ| and |F1sinα|=|F2sinβ|.

Therein, the step of performing torque control on the front drive motor and the rear drive motor and performing steering angle control on the front wheels and the rear wheels means adjusting Ta, Tb, α, and β under the premise that Ay is 0, until Ax is 0, and the adjustment of Ta, Tb, α, and β must satisfy the constraint conditions of |F1cosα|=|F2cosβ| and |F1sinα|=|F2sinβ|.

After the step of performing torque control on the front drive motor and the rear drive motor and performing steering angle control on the front wheels and the rear wheels until Ax is 0, Vh of the vehicle is acquired to determine whether Vh reaches Vd. If Vh reaches Vd, it indicates that when the vehicle is turning in place, it will turn according to a preset turning speed (i.e., Vd), and an actual turning speed of the vehicle is equal to Vd. It also indicates that the actual turning speed of the vehicle will not be too fast or too slow, which not only allows the in-place steering to be completed in a short time but also ensures the safety of the in-place steering.

If Vh fails to reach Vd, it indicates that when the vehicle is turning in place, the actual turning speed of the vehicle may be too fast or too slow. If it is determined that Vh>Vd, then it indicates that the actual turning speed of the vehicle is too fast, and Ta and Tb are reduced based on the preset torque adjustment ratio until Vh=Vd; if it is determined that Vh<Vd, then it indicates that the actual turning speed of the vehicle is too slow, and Ta and Tb are increased based on the preset torque adjustment ratio until Vh=Vd. After Vh=Vd, no further adjustment is made to Ta and Tb, that is, Ta, Tb, α, and β are maintained unchanged. Therein, the preset torque adjustment ratio includes a magnification factor or a reduction factor for torque. For example, an increased Ta is denoted as Ta1, where Ta1=Ta×magnification factor; an increased Tb is denoted as Tb1, where Tb1=Tb×magnification factor. A reduced Ta is denoted as Ta2, where Ta2=Ta/reduction factor, and A reduced Tb is denoted as Tb2, where Tb2=Tb/reduction factor.

In one possible implementation, the step of performing torque control on the front drive motor and the rear drive motor, and performing steering angle control on the front wheels and the rear wheels based on the first determination result includes:
controlling the front drive motor to continuously output a reduced first torque, controlling the rear drive motor to continuously output an increased second torque, and maintaining the steering angles of the front wheels and the rear wheels unchanged in response to the first determination result being that the lateral acceleration reaches the preset acceleration threshold;
adjusting the first torque, the second torque, and the steering angles of the front wheels and the rear wheels until the lateral acceleration reaches the preset acceleration threshold in response to the first determination result being that the lateral acceleration fails to reach the preset acceleration threshold.

If, under the premise of Ax=0, Ay=0, that is, the constraint conditions of |F1cosα|=|F2cosβ| and |F1sinα|=|F2sinβ| are satisfied, then the front drive motor is controlled to continuously output the reduced Ta, the rear drive motor is controlled to continuously output the increased Tb, and α and β are maintained unchanged. If, under the premise of Ax=0, Ay≠0, that is, the constraint conditions of |F1cosα|=|F2cosβ| and |F1sinα|=|F2sinβ| are not satisfied, then Ta and Tb are adjusted until Ay=0, thereby satisfying the constraint conditions of |F1cosα|=|F2cosβ| and |F1sinα|=|F2sinβ|.

In one possible implementation, the step of adjusting, based on the magnitude relation, the first torque, the second torque, the steering angle of the front wheels, the steering angle of the rear wheels, and the yaw rate of the vehicle includes:
increasing the steering angles of the front wheels and the rear wheels, and reducing the first torque and the second torque, until an absolute value of the first longitudinal force is the same as an absolute value of the second longitudinal force, and an absolute value of the first lateral force is the same as an absolute value of the second lateral force in response to the magnitude relation being that the longitudinal acceleration is greater than the preset acceleration threshold and the lateral acceleration reaches the preset acceleration threshold;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

As shown in FIG. 4, if Ax>0 and Ay=0, it indicates that the vehicle is moving along the positive half-axis of the x-axis, with |F1x|>|F2x| and |F1y|=|F2y|.

For the case of Ax>0 and Ay=0, α and β are increased, and Ta and Tb are reduced until Ax=0 and the constraint conditions of |F1cosα|=|F2cosβ| and |F1sinα|=|F2sinβ| are satisfied. Therein, the increased α is denoted as α1, the increased β is denoted as β1, with |α-α1|≤J, |β-β1|≤J. For example, J is in the range (0,5°].

After the constraint conditions of |F1cosα|=|F2cosβ| and |F1sinα|=|F2sinβ| are satisfied, that is, Ax=0 and Ay=0, Vh of the vehicle is acquired to determine whether Vh reaches Vd. If Vh reaches Vd, it indicates that when the vehicle is turning in place, it will turn according to the preset turning speed (i.e., Vd), and the actual turning speed of the vehicle is equal to Vd. It also indicates that the actual turning speed of the vehicle will not be too fast or too slow, which not only allows the in-place steering to be completed in a short time but also ensures the safety of the in-place steering.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, it indicates that the actual turning speed of the vehicle is too slow, and then Ta and Tb are increased based on the preset torque adjustment ratio until Vh=Vd. After Vh=Vd, no further adjustment is made to Ta and Tb, that is, Ta, Tb, α, and β are maintained unchanged.

In one possible implementation, the step of adjusting, based on the magnitude relation, the first torque, the second torque, the steering angle of the front wheels, the steering angle of the rear wheels, and the yaw rate of the vehicle includes:
increasing the steering angle of the front wheels and decreasing the steering angle of the rear wheels until the longitudinal acceleration reaches the preset acceleration threshold in response to the magnitude relation being that the longitudinal acceleration is greater than the preset acceleration threshold and the lateral acceleration is less than the preset acceleration threshold;
reacquiring the lateral acceleration in response to the longitudinal acceleration reaching the preset acceleration threshold;
determining whether a re-acquired lateral acceleration reaches the preset acceleration threshold to obtain a second determination result;
performing torque control on the front drive motor and the rear drive motor based on the second determination result, and performing steering angle control on the front wheels and the rear wheels based on the second determination result, until an absolute value of the first longitudinal force is the same as an absolute value of the second longitudinal force, and an absolute value of the first lateral force is the same as an absolute value of the second lateral force;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

As shown in FIG. 4, if Ax>0 and Ay<0, it indicates that the vehicle is moving in the fourth quadrant, with |F1x|>|F2x| and |F1y|<|F2y|.

For the case of Ax>0 and Ay<0, α is increased and β is reduced until Ax=0. Therein, Ax=0 may not be achieved with a single adjustment of increasing α and reducing β. If Ax is not 0 after the first increase of α and reduction of β, α is increased and β is reduced continuously until Ax=0.

Upon detecting that Ax=0, Ay is reacquired again to determine whether Ay is 0 to obtain the second determination result, and torque control is performed on the front drive motor and the rear drive motor and steering angle control is performed on the front wheels and the rear wheels based on the second determination result, until the vehicle satisfies the constraint conditions of |F1cosα|=|F2cosβ| and |F1sinα|=|F2sinβ|.

After the step of performing torque control on the front drive motor and the rear drive motor, and performing steering angle control on the front wheels and the rear wheels until Ax is 0, Vh of the vehicle is acquired to determine whether Vh reaches Vd. If Vh reaches Vd, it indicates that when the vehicle is turning in place, it will turn according to the preset turning speed (i.e., Vd), and the actual turning speed of the vehicle is equal to Vd. It also indicates that the actual turning speed of the vehicle will not be too fast or too slow, which not only allows the in-place steering to be completed in a short time but also ensures the safety of the in-place steering.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, it indicates that the actual turning speed of the vehicle is too slow, and then Ta and Tb are increased based on the preset torque adjustment ratio until Vh=Vd. After Vh=Vd, no further adjustment is made to Ta and Tb, that is, Ta, Tb, α, and β are maintained unchanged.

In one possible implementation, the step of performing torque control on the front drive motor and the rear drive motor based on the second determination result, and performing steering angle control on the front wheels and the rear wheels based on the second determination result includes:
maintaining output torques of the front drive motor and the rear drive motor unchanged, maintaining an increased steering angle of the front wheels unchanged and maintaining a decreased steering angle of the rear wheels unchanged in response to the second determination result being that the lateral acceleration reaches the preset acceleration threshold; and
adjusting the first torque, the second torque, and the steering angles of the front wheels and the rear wheels until the lateral acceleration reaches the preset acceleration threshold in response to the second determination result being that the lateral acceleration fails to reach the preset acceleration threshold.

If, under the premise of Ax=0, Ay=0, that is, the constraint conditions of |F1cosα|=|F2cosβ| and |F1sinα|=|F2sinβ| are satisfied, then the output torque of the front drive motor and he output torque of the rear drive motor are maintained unchanged, that is, Ta output by the front drive motor is maintained unchanged, Tb output by the rear drive motor is maintained unchanged, and the increased α and the decreased β are maintained unchanged. If, under the premise of Ax=0, Ay≠0, that is, the constraint conditions of |F1cosα|=|F2cosβ| and |F1sinα|=|F2sinβ| are not satisfied, then Ta and Tb are adjusted, and α and β are adjusted continuously based on the increased α and the decreased β until Ay=0, thereby satisfying the constraint conditions of |F1cosα|=|F2cosβ| and |F1sinα|=|F2sinβ|.

In one possible implementation, the step of adjusting, based on the magnitude relation, the first torque, the second torque, the steering angle of the front wheels, the steering angle of the rear wheels, and the yaw rate of the vehicle includes:
determining whether the yaw rate reaches a preset angular velocity in response to the magnitude relation being that the longitudinal acceleration reaches the preset acceleration threshold and the lateral acceleration is greater than or less than the preset acceleration threshold; and
if not, reducing the first torque and the second torque based on a preset torque adjustment ratio, and reducing the steering angle of the front wheels and the steering angle of the rear wheels based on a preset steering angle adjustment value in response to the yaw rate being greater than the preset angular velocity; or, increasing the first torque and the second torque based on the preset torque adjustment ratio, and increasing the steering angle of the front wheels and the steering angle of the rear wheels based on the preset steering angle adjustment value in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

As shown in FIG. 4, if Ax=0 and Ay>0 or Ay<0, it indicates that the vehicle is moving along the positive half-axis of the y-axis or the negative half-axis of the y-axis, that is, |F1x|=|F2x| and |F1y|>|F2y| or |F1y|<|F2y|.

For the case of Ax=0 and Ay>0 or Ay<0, Vh of the vehicle is acquired to determine whether Vh reaches Vd. If Vh reaches Vd, it indicates that when the vehicle is turning in place, it will turn according to a preset turning speed (i.e., Vd), and an actual turning speed of the vehicle is equal to Vd. It also indicates that the actual turning speed of the vehicle will not be too fast or too slow, which not only allows the in-place steering to be completed in a short time but also ensures the safety of the in-place steering. In other words, when Vh reaches Vd, Ta, Tb, α, and β are maintained unchanged.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, it indicates that the actual turning speed of the vehicle is too slow, and then Ta and Tb are increased based on the preset torque adjustment ratio until Vh=Vd. After Vh=Vd, no further adjustment is made to Ta and Tb, that is, Ta, Tb, α, and β are maintained unchanged. Therein, the increased α = α + preset steering angle adjustment value, the increased β = β + preset steering angle adjustment value, the reduced α = α - preset steering angle adjustment value, and the reduced β = β - preset steering angle adjustment value. During the adjustment of Ta, Tb, α, and β, it is necessary to ensure that the vehicle satisfies the constraint conditions of |F1cosα|=|F2cosβ| and |F1sinα|=|F2sinβ|.

In one possible implementation, the step of adjusting, based on the magnitude relation, the first torque, the second torque, the steering angle of the front wheels, the steering angle of the rear wheels, and the yaw rate of the vehicle includes:
determining whether the yaw rate reaches a preset angular velocity in response to the magnitude relation being that both the longitudinal acceleration and the lateral acceleration reach the preset acceleration threshold; and
if yes, maintaining the first torque and the second torque unchanged, and maintaining the steering angles of the front wheels and the rear wheels unchanged;
if not, reducing the first torque and the second torque based on a preset torque adjustment ratio in response to the yaw rate being greater than the preset angular velocity; or, increasing the first torque and the second torque based on the preset torque adjustment ratio in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

As shown in FIG. 4, if Ax=0 and Ay=0, it indicates that the vehicle satisfies the constraint conditions of |F1cosα|=|F2cosβ| and |F1sinα|=|F2sinβ|.

For the case of Ax=0 and Ay=0, Vh of the vehicle is acquired to determine whether Vh reaches Vd. If Vh reaches Vd, it indicates that when the vehicle is turning in place, it will turn according to a preset turning speed (i.e., Vd), and an actual turning speed of the vehicle is equal to Vd. It also indicates that the actual turning speed of the vehicle will not be too fast or too slow, which not only allows the in-place steering to be completed in a short time but also ensures the safety of the in-place steering. In other words, when Vh reaches Vd, Ta, Tb, α, and β are maintained unchanged.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, it indicates that the actual turning speed of the vehicle is too slow, and then Ta and Tb are increased based on the preset torque adjustment ratio until Vh=Vd. After Vh=Vd, no further adjustment is made to Ta and Tb, that is, Ta and Tb are maintained unchanged. Therein, during the adjustment of Ta and Tb, it is necessary to ensure that the vehicle satisfies the constraint conditions of |F1cosα|=|F2cosβ| and |F1sinα|=|F2sinβ|.

In one possible implementation, the adjusting, based on the magnitude relation, the first torque, the second torque, the steering angle of the front wheels, the steering angle of the rear wheels, and the yaw rate of the vehicle include:
reducing the steering angle of the front wheel and increasing the steering angle of the rear wheel in response to the magnitude relation being that the longitudinal acceleration is less than the preset acceleration threshold and the lateral acceleration is greater than the preset acceleration threshold;
determining whether an absolute value of the first longitudinal force is the same as an absolute value of the second longitudinal force and an absolute value of the first lateral force is the same as an absolute value of the second lateral force;
if yes, maintaining the respective output torques of the front drive motor and the rear drive motor unchanged, maintaining a reduced steering angle of the front wheel unchanged, and maintaining an increased steering angle of the rear wheels unchanged;
if not, adjusting the first torque, the second torque, and the steering angles of the front wheels and the rear wheels until the absolute value of the first longitudinal force is the same as the absolute value of the second longitudinal force, and the absolute value of the first lateral force is the same as the absolute value of the second lateral force; and
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

As shown in FIG. 4, if Ax<0 and Ay>0, it indicates that the vehicle is moving towards the second quadrant, |F1x|<|F2x| and |F1y|>|F2y|.

For the case of Ax<0 and Ay>0, α is reduced and β is increased. After reducing α and increasing β, F1x, F2x, F1y, and F2y are acquired to determine whether |F1x|=|F2x| and |F1y|=|F2y|, that is, it is determined whether the vehicle satisfies the constraint conditions of |F1cosα|=|F2cosβ| and |F1sinα|=|F2sinβ|. If |F1x|=|F2x| and |F1y|=|F2y|, that is, the vehicle satisfies the constraint conditions, then the output torque of the front drive motor and the output torque of the rear drive motor are maintained unchanged, that is, the output Ta of the front drive motor is maintained unchanged, the output Tb of the rear drive motor is maintained unchanged, and the decreased α is maintained unchanged and the increased β is maintained unchanged. If |F1x|=|F2x| and |F1y|=|F2y| are not satisfied, that is, the vehicle does not satisfy the constraint conditions, then Ta and Tb are adjusted, and α and β are adjusted based on the decreased α and increased β continuously until the vehicle satisfies the constraint conditions, where the vehicle satisfying the constraint conditions indicates Ax=0 and Ay=0.

When the vehicle satisfies the constraint conditions, Vh of the vehicle is acquired to determine whether Vh reaches Vd. If Vh reaches Vd, it indicates that when the vehicle is turning in place, it will turn according to the set turning speed (i.e., Vd), the actual turning speed of the vehicle is equal to Vd, and it also indicates that the actual turning speed of the vehicle is neither too fast nor too slow, which not only allows the in-place steering to be completed in a short time but also ensures the safety of the in-place steering. In other words, when Vh reaches Vd, Ta and Tb, α and β are maintained unchanged.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, indicating that the actual turning speed of the vehicle is too slow, then Ta and Tb are increased based on the preset torque adjustment ratio until Vh=Vd. After Vh=Vd, no further adjustment is made to Ta and Tb, that is, Ta and Tb are maintained unchanged. During the adjustment of Ta and Tb, it is necessary to ensure that the vehicle satisfies the constraint conditions.

In a possible implementation, the step of adjusting, based on the magnitude relation, the first torque, the second torque, the steering angle of the front wheels, the steering angle of the rear wheels, and the yaw rate of the vehicle includes:
reducing the steering angle of the front wheels and increasing the first torque, or increasing the steering angle of the rear wheels and reducing the second torque until an absolute value of the first longitudinal force is the same as an absolute value of the second longitudinal force, and an absolute value of the first lateral force is the same as an absolute value of the second lateral force in response to the magnitude relation being that the longitudinal acceleration is less than the preset acceleration threshold and the lateral acceleration reaches the preset acceleration threshold; and
determining whether the yaw rate reaches the preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

As shown in FIG. 4, if Ax<0 and Ay=0, it indicates that the vehicle is moving along the negative half-axis of the x-axis, |F1x|<|F2x| and |F1y|=|F2y|.

For the case of Ax<0 and Ay=0, Ta is increased and α is reduced, or, Tb is reduced and β is increased, until Ax=0, |F1x|=|F2x| and |F1y|=|F2y|, so that the vehicle satisfy the constraint conditions.

When the vehicle satisfies the constraint conditions, Vh of the vehicle is acquired to determine whether Vh reaches Vd. If Vh reaches Vd, it indicates that when the vehicle is turning in place, it will turn according to a preset turning speed (i.e., Vd), and an actual turning speed of the vehicle is equal to Vd. It also indicates that the actual turning speed of the vehicle is neither too fast nor too slow, which not only allows the in-place steering to be completed in a short time but also ensures the safety of the in-place steering. In other words, when Vh reaches Vd, Ta and Tb, α and β are maintained unchanged.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, indicating that the actual turning speed of the vehicle is too slow, and then Ta and Tb are increased based on the preset torque adjustment ratio until Vh=Vd. After Vh=Vd, no further adjustment is made to Ta and Tb, that is, Ta and Tb are maintained unchanged. During the adjustment of Ta and Tb, it is necessary to ensure that the vehicle satisfies the constraint conditions.

In a possible implementation, the step of adjusting, based on the magnitude relation, the first torque, the second torque, the steering angle of the front wheels, the steering angle of the rear wheels, and the yaw rate of the vehicle includes:
increasing the first torque, reducing the steering angle of the front wheels, reducing the second torque, and increasing the steering angle of the rear wheels in response to the magnitude relation being that the longitudinal acceleration is less than the preset acceleration threshold and the lateral acceleration is less than the preset acceleration threshold, until an absolute value of the first longitudinal force is the same as an absolute value of the second longitudinal force, and an absolute value of the first lateral force is the same as an absolute value of the second lateral force;
determining whether the yaw rate reaches the preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

As shown in FIG. 4, if Ax<0 and Ay<0, it indicates that the vehicle is moving in the third quadrant, |F1x|<|F2x| and |F1y|<|F2y|.

For the case of Ax<0 and Ay<0, Ta is increased, α is reduced, Tb is reduced, and β is increased, until Ax=0, Ay=0, |F1x|=|F2x| and |F1y|=|F2y|, so that the vehicle satisfies the constraint conditions.

When the vehicle satisfies the constraint conditions, Vh of the vehicle is acquired to determine whether Vh reaches Vd. If Vh reaches Vd, it indicates that when the vehicle is turning in place, it will turn according to the set turning speed (i.e., Vd), the actual turning speed of the vehicle is equal to Vd. And it also indicates that the actual turning speed of the vehicle is neither too fast nor too slow, which not only allows the in-place steering to be completed in a short time but also ensures the safety of the in-place steering. In other words, when Vh reaches Vd, Ta and Tb, α and β are maintained unchanged.

If Vh fails to reach Vd, it indicates that when the vehicle is turning in place, the actual turning speed of the vehicle may be too fast or too slow. If it is determined that Vh>Vd, it indicates that the actual turning speed of the vehicle is too fast, and then Ta and Tb are reduced based on the preset torque adjustment ratio until Vh=Vd; if it is determined that Vh<Vd, indicating that the actual turning speed of the vehicle is too slow, and then Ta and Tb are increased based on the preset torque adjustment ratio until Vh=Vd. After Vh=Vd, no further adjustment is made to Ta and Tb, that is, Ta and Tb are maintained unchanged. During the adjustment of Ta and Tb, it is necessary to ensure that the vehicle satisfies the constraint conditions.

In a possible implementation, the controlling the front wheels and the rear wheels to steer in the same direction to respective target steering angles in response to the in-place steering mode of the vehicle being activated includes:
acquiring a preset in-place steering direction in response to the in-place steering mode of the vehicle being activate;
acquiring a preset steering angle corresponding to the in-place steering direction to obtain the respective target steering angles for the front wheels and the rear wheels; and
controlling the front wheels and the rear wheels to steer in the same direction to the respective target steering angles.

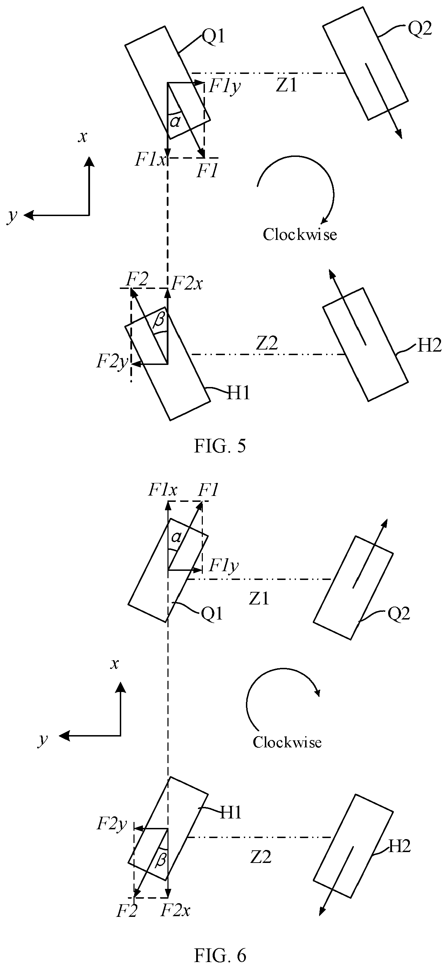

The vehicle is equipped with a switch for activating and deactivating the in-place steering mode, which is displayed on the central control screen of the vehicle. The central control screen also displays selectable in-place steering directions, that is, counterclockwise direction and clockwise direction. When the vehicle turns counterclockwise in place, the direction of F1y is to the left; when the vehicle turns clockwise in place, the direction of F1y is to the right. For the case where the in-place steering direction of the vehicle is counterclockwise, it is preset that the front wheels and the rear wheels need to be controlled to turn left simultaneously, and the torque direction output by the front drive motor is counterclockwise, and the torque direction output by the rear drive motor is clockwise, as shown in FIG. 2; or, it is necessary to control the front wheels and the rear wheels to turn right simultaneously, and the torque direction output by the front drive motor is clockwise, and the torque direction output by the rear drive motor is counterclockwise, as shown in FIG. 3. For the case where the in-place steering direction of the vehicle is clockwise, it is preset that the front wheels and the rear wheels need to be controlled to turn left simultaneously, the torque direction output by the front drive motor is clockwise, and the torque direction output by the rear drive motor is counterclockwise, as shown in FIG. 5, which shows another exemplary schematic diagram of a vehicle with four-wheel steering and independent front and rear axle drive; or, it is necessary to control the front wheels and the rear wheels to turn right simultaneously, the torque direction output by the front drive motor is counterclockwise, and the torque direction output by the rear drive motor is clockwise, as shown in FIG. 6, which shows still another exemplary schematic diagram of a vehicle with four-wheel steering and independent front and rear axle drive.

FIGS. 5 and 6 illustrate the vehicle turning clockwise in place. In FIG. 5, the front drive motor rotates in reverse (clockwise rotation), the front wheels rotate in reverse (clockwise rotation), the rear drive motor rotates forward (counterclockwise rotation), the rear wheels rotate forward (counterclockwise), the direction of F1 is backward, the direction of F2 is forward, and the direction of F1y is to the right; in FIG. 6, the front drive motor rotates forward (counterclockwise rotation), the front wheels rotate forward (counterclockwise rotation), the rear drive motor rotates in reverse (clockwise rotation), the rear wheels rotate in reverse (clockwise rotation), the direction of F1 is forward, the direction of F2 is backward, and the direction of F1y is to the right.

Both the clockwise and counterclockwise in-place steering directions correspond to controlling the front wheels and the rear wheels to turn left simultaneously and controlling the front wheels and the rear wheels to turn right simultaneously. After the user selects the in-place steering direction on the central control screen, the user can also select the direction for controlling the front wheels and the rear wheels to turn simultaneously, for example, selecting left turn.

A corresponding preset steering angle is preset for the in-place steering direction. Once the in-place steering direction is selected, the corresponding preset steering angle can be acquired, that is, the target steering angle is acquired, and then the front wheels and the rear wheels are controlled to steer in the same direction to respective target steering angles. For example, if controlling the front wheels and the rear wheels to turn left simultaneously is selected, then the front wheels and the rear wheels are controlled to turn left to the target steering angle. The preset steering angle corresponding to the clockwise in-place steering direction and the preset steering angle corresponding to the counterclockwise in-place steering direction may be the same or different.

The following is an operation flow for a user using the in-place steering function of the vehicle.

Step 1: The user activates the in-place steering mode on the central control screen through a switch and the central control screen prompts the user to select the in-place steering direction and the direction for controlling the front wheels and the rear wheels to turn simultaneously. For example, the user selects the in-place steering direction as: counterclockwise, and the direction for controlling the front wheels and the rear wheels to turn simultaneously as: left turn.

Step 2: The vehicle prompts the user to release the steering wheel, release the accelerator and brake pedals.

Step 3: The steering wheel automatically turns left by a certain angle, the front wheels and the rear wheels turn left proportionally, and then the steering angles of the front wheels and the rear wheels reach the respective target steering angles. After it is determined that the steering angles of the front wheels and the rear wheels have reached the respective target steering angles, the user is prompted again whether to start the in-place steering of the vehicle. After the user clicks a confirmation button on the central control screen, the vehicle automatically executes the in-place steering operation, that is, the operation process of the above embodiment;

Step 4: After the vehicle executes the in-place steering operation to reach the target position, the brake pedal is depressed and the vehicle stops stably at the target position. The in-place steering mode is deactivated, the steering wheel is controlled to return to center, and the front wheels and rear wheels return to center, that is, the vehicle's counterclockwise in-place steering is completed.

The control process for the vehicle's clockwise in-place steering is similar to the control process for the vehicle's counterclockwise in-place steering, and will not be described in detail in the present application. Whether the vehicle turns clockwise or counterclockwise in place, the problem of difficulty in turning around on narrow roads may be solved, and the vehicle's trafficability may be improved.

The following are device embodiments of the present application, which can be used to execute the method embodiments of the present application. For details not disclosed in the device embodiments of the present application, it can be referred to the method embodiments of the present application.

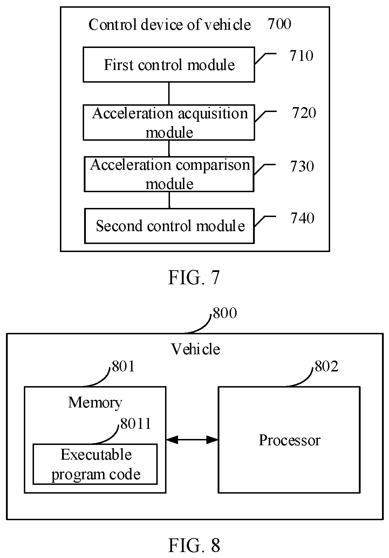

FIG. 7 shows a schematic structural diagram of a control device for a vehicle provided in an embodiment of the present application. Exemplarily, as shown in FIG. 7, the vehicle includes a front axle, a rear axle, a front drive motor for driving the front axle, and a rear drive motor for driving the rear axle. The above-mentioned control device 700 includes:
a first control module 710, configured to control front wheels and rear wheels to steer in a same direction to respective target steering angles in response to an in-place steering mode of the vehicle being activated, and control the front drive motor to output a first torque and controlling the rear drive motor to output a second torque; wherein the first torque and the second torque have the same magnitude and opposite directions;
an acceleration acquisition module 720, configured to acquire a lateral acceleration and a longitudinal acceleration of the vehicle;
an acceleration comparison module 730, configured to determine a magnitude relation between the lateral acceleration and a preset acceleration threshold and a magnitude relation between the longitudinal acceleration and the preset acceleration threshold;
a second control module 740, configured to adjust, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple.

In a possible implementation, the second control module 740 is specifically configured to: reduce the first torque and increasing the second torque until the longitudinal acceleration reaches the preset acceleration threshold in response to the magnitude relation being that both the lateral acceleration and the longitudinal acceleration are greater than a preset acceleration threshold; reacquire the lateral acceleration in response to the longitudinal acceleration reaching the preset acceleration threshold; determine whether a re-acquired lateral acceleration reaches the preset acceleration threshold to obtain a first determination result; performing torque control on the front drive motor and the rear drive motor based on the first determination result, and perform steering angle control on the front wheels and the rear wheels based on the first determination result, until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In a possible implementation, the second control module 740 is specifically configured, in terms of performing torque control on the front drive motor and the rear drive motor and performing steering angle control on the front wheels and the rear wheels based on the first determination result based on the first determination result, to: control the rear drive motor to continuously output an increased second torque, and maintain the steering angles of the front wheels and the rear wheels unchanged in response to the first determination result being that the lateral acceleration reaches the preset acceleration threshold, control the front drive motor to continuously output a reduced first torque; adjust the first torque, the second torque, and the steering angles of the front wheels and the rear wheels until the lateral acceleration reaches the preset acceleration threshold in response to the first determination result being that the lateral acceleration fails to reach the preset acceleration threshold.

In a possible implementation, the second control module 740 is specifically configured to: increase the steering angles of the front wheels and the rear wheels, and reduce the first torque and the second torque, until an absolute value of the first longitudinal force is the same as an absolute value of the second longitudinal force, and an absolute value of the first lateral force is the same as an absolute value of the second lateral force in response to the magnitude relation being that the longitudinal acceleration is greater than the preset acceleration threshold and the lateral acceleration reaches the preset acceleration threshold; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In a possible implementation, the second control module 740 is specifically configured to: increase the steering angle of the front wheels and decreasing the steering angle of the rear wheels until the longitudinal acceleration reaches the preset acceleration threshold in response to the magnitude relation being that the longitudinal acceleration is greater than the preset acceleration threshold and the lateral acceleration is less than the preset acceleration threshold; reacquire the lateral acceleration in response to the longitudinal acceleration reaching the preset acceleration threshold; determine whether a re-acquired lateral acceleration reaches the preset acceleration threshold to obtain a second determination result; perform torque control on the front drive motor and the rear drive motor based on the second determination result, and perform steering angle control on the front wheels and the rear wheels based on the second determination result, until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module 740 is specifically configured to: maintain output torques of the front drive motor and the rear drive motor unchanged, maintain an increased steering angle of the front wheels unchanged and maintain a decreased steering angle of the rear wheels unchanged in response to the second determination result being that the lateral acceleration reaches the preset acceleration threshold; and adjust the first torque, the second torque, and the steering angles of the front wheels and the rear wheels until the lateral acceleration reaches the preset acceleration threshold in response to the second determination result being that the lateral acceleration fails to reach the preset acceleration threshold.

In one possible implementation, the second control module 740 is specifically configured to: determine whether the yaw rate reaches a preset angular velocity in response to the magnitude relation being that the longitudinal acceleration reaches the preset acceleration threshold and the lateral acceleration is greater than or less than the preset acceleration threshold; and if not, reduce the first torque and the second torque based on a preset torque adjustment ratio, and reduce the steering angle of the front wheels and the steering angle of the rear wheels based on a preset steering angle adjustment value in response to the yaw rate being greater than the preset angular velocity; or, increase the first torque and the second torque based on the preset torque adjustment ratio, and increase the steering angle of the front wheels and the steering angle of the rear wheels based on the preset steering angle adjustment value in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

In one possible implementation, the second control module 740 is specifically configured to: determine whether the yaw rate reaches a preset angular velocity in response to the magnitude relation being that both the longitudinal acceleration and the lateral acceleration reach the preset acceleration threshold; and if yes, maintain the first torque and the second torque unchanged, and maintain the steering angles of the front wheels and the rear wheels unchanged; if not, reduce the first torque and the second torque based on a preset torque adjustment ratio in response to the yaw rate being greater than the preset angular velocity; or, increase the first torque and the second torque based on the preset torque adjustment ratio in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

In one possible implementation, the second control module 740 is specifically configured to: reduce the steering angle of the front wheel and increasing the steering angle of the rear wheel in response to the magnitude relation being that the longitudinal acceleration is less than the preset acceleration threshold and the lateral acceleration is greater than the preset acceleration threshold; determine whether an absolute value of the first longitudinal force is the same as an absolute value of the second longitudinal force and an absolute value of the first lateral force is the same as an absolute value of the second lateral force; if yes, maintain the respective output torques of the front drive motor and the rear drive motor unchanged, maintain a reduced steering angle of the front wheel unchanged, and maintain an increased steering angle of the rear wheels unchanged; if not, adjust the first torque, the second torque, and the steering angles of the front wheels and the rear wheels until the absolute value of the first longitudinal force is the same as the absolute value of the second longitudinal force, and the absolute value of the first lateral force is the same as the absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module 740 is specifically configured to: reduce the steering angle of the front wheels and increasing the first torque, or increase the steering angle of the rear wheels and reducing the second torque in response to the magnitude relation being that the longitudinal acceleration is less than the preset acceleration threshold and the lateral acceleration reaches the preset acceleration threshold until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the second control module 740 is specifically configured to: increase the first torque, reducing the steering angle of the front wheels, reduce the second torque, and increase the steering angle of the rear wheels in response to the magnitude relation being that the longitudinal acceleration is less than the preset acceleration threshold and the lateral acceleration is less than the preset acceleration threshold, until an absolute value of the first longitudinal force is the same as an absolute value of the second longitudinal force, and an absolute value of the first lateral force is the same as an absolute value of the second lateral force; determine whether the yaw rate reaches a preset angular velocity; and if not, reduce the first torque and the second torque based on a preset torque adjustment ratio in response to the yaw rate being greater than the preset angular velocity, or, increase the first torque and the second torque based on the preset torque adjustment ratio in response to the yaw rate being less than the preset angular velocity, until the yaw rate reaches the preset angular velocity.

In one possible implementation, the first control module 710 is specifically configured to: acquire a preset in-place steering direction in response to the in-place steering mode of the vehicle being activated; acquire a preset steering angle corresponding to the in-place steering direction to obtain the respective target steering angles for the front wheels and the rear wheels; and control the front wheels and the rear wheels to steer in the same direction to the respective target steering angles.

It should be noted that, in the control device of the vehicle provided by the above embodiments, the division of the above functional modules is used as an example for illustration when executing the vehicle control method. In practical applications, the above functions may be allocated to different functional modules as needed, that is, the internal structure of the device is divided into different functional modules to complete all or part of the functions described above. In addition, the control device of a vehicle provided by the above embodiments and the vehicle control method embodiments belong to the same concept. Therefore, for details not disclosed in the device embodiments of the present application, it can be referred to the above vehicle control method embodiments of the present application, and details are not repeated here.

The above serial numbers of the embodiments of the present application are for description only and do not represent the superiority or inferiority of the embodiments.

FIG. 8 shows a schematic structural diagram of a control device for a vehicle with four-wheel steering and independent front and rear axle drive provided by an embodiment of the present application.

Exemplarily, as shown in FIG. 8, the vehicle 800 includes: a memory 801 and a processor 802, where the memory 801 stores executable program code 8011, and the processor 802 is configured to call and execute the executable program code 8011 to execute a vehicle control method.

In this embodiment, the vehicle may be divided into functional modules based on the above method examples. For example, it may correspond to each functional module, or two or more functions may be integrated into one processing module. The above integrated modules may be implemented in the form of hardware. It should be noted that the division of modules in this embodiment is schematic and is only a logical function division. In actual implementation, there may be another division manner.

In the case of dividing each functional module corresponding to each function, the vehicle may include: a first control module, an acceleration acquisition module, an acceleration comparison module, a second control module, etc. It should be noted that all relevant content of each step involved in the above method embodiments may be referred to the functional description of the corresponding functional module, and details are not repeated here.

The vehicle provided in this embodiment is used to execute the above vehicle control method, and therefore can achieve the same effect as the above implementation method.

In the case of using an integrated unit, the vehicle may include a processing module and a storage module. The processing module may be used to control and manage the actions of the vehicle. The storage module may be used to support the vehicle in executing mutual program codes, data, etc.

The processing module may be a processor or a controller, which may implement or execute various exemplary logical blocks, modules, and circuits described in conjunction with the disclosure of the present application. The processor may also be a combination that implements computing functions, such as a combination including one or more microprocessors, a combination of a digital signal processing (DSP) and a microprocessor, etc. The storage module may be a memory.

This embodiment also provides a computer-readable storage medium, in which computer program code is stored. When the computer program code is run on a computer, it causes the computer to execute the relevant method steps to implement the vehicle control method in the above embodiments.

This embodiment also provides a computer program product. When the computer program product is run on a computer, it causes the computer to execute the relevant steps to implement the vehicle control method in the above embodiments.

In addition, the vehicle provided by the embodiments of the present application may specifically be a chip, a component, or a module. The vehicle may include a connected processor and a memory; where the memory is used to store instructions, and when the vehicle is running, the processor may call and execute the instructions so that the chip executes the vehicle control method in the above embodiments.

The vehicle, computer-readable storage medium, computer program product, or chip provided in this embodiment are all used to execute the corresponding vehicle control method provided above. Therefore, for the beneficial effects that can be achieved, reference may be made to the beneficial effects in the corresponding vehicle control method provided above, and details are not repeated here.

Through the description of the above implementations, those skilled in the art can understand that, for the convenience and brevity of description, the division of the above functional modules is used as an example for illustration. In practical applications, the above functions may be allocated to different functional modules as needed, that is, the internal structure of the device is divided into different functional modules to complete all or part of the functions described above.

In the embodiments provided in the present application, it should be understood that the disclosed device and method may be implemented in other ways. For example, the device embodiments described above are merely illustrative. For example, the division of modules or units is only a logical function division. In actual implementation, there may be another division manner. For example, multiple units or components may be combined or integrated into another device, or some features may be omitted or not executed. In another aspect, the mutual coupling or direct coupling or communication connection shown or discussed may be through some interfaces, and the indirect coupling or communication connection of devices or units may be in electrical, mechanical, or other forms.

The above content is only the specific implementation of the present application, but the protection scope of the present application is not limited thereto. Any person skilled in the art can easily think of changes or substitutions within the technical scope disclosed in the present application, which should be covered within the protection scope of the present application. Therefore, the protection scope of the present application shall be subject to the protection scope of the claims.

## Claims

1. A vehicle control method, the vehicle comprising a front axle, a rear axle, a front drive motor for driving the front axle, and a rear drive motor for driving the rear axle, wherein the control method comprises:
controlling front wheels and rear wheels to steer in a same direction to respective target steering angles in response to an in-place steering mode of the vehicle being activated;
controlling the front drive motor to output a first torque and controlling the rear drive motor to output a second torque; wherein the first torque and the second torque have the same magnitude and opposite directions;
acquiring a lateral acceleration and a longitudinal acceleration of the vehicle;
determining a magnitude relation between the lateral acceleration and a preset acceleration threshold and a magnitude relation between the longitudinal acceleration and the preset acceleration threshold; and
adjusting, based on the magnitude relation, the first torque, the second torque, a steering angle of the front wheels, a steering angle of the rear wheels, and a yaw rate of the vehicle, until a first longitudinal force on the front axle in a longitudinal direction and a second longitudinal force on the rear axle in the longitudinal direction have the same magnitude and opposite directions, and a first lateral force on the front axle in a lateral direction and a second lateral force on the rear axle in the lateral direction form a couple.

2. The control method according to claim 1, wherein the adjusting, based on the magnitude relation, the first torque, the second torque, the steering angle of the front wheels, the steering angle of the rear wheels, and the yaw rate of the vehicle comprises:
reducing the first torque and increasing the second torque until the longitudinal acceleration reaches the preset acceleration threshold in response to the magnitude relation being that both the lateral acceleration and the longitudinal acceleration are greater than a preset acceleration threshold;
reacquiring the lateral acceleration in response to the longitudinal acceleration reaching the preset acceleration threshold;
determining whether a re-acquired lateral acceleration reaches the preset acceleration threshold to obtain a first determination result;
performing torque control on the front drive motor and the rear drive motor based on the first determination result, and performing steering angle control on the front wheels and the rear wheels based on the first determination result, until an absolute value of the first longitudinal force is the same as an absolute value of the second longitudinal force, and an absolute value of the first lateral force is the same as an absolute value of the second lateral force;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

3. The control method according to claim 2, wherein the performing torque control on the front drive motor and the rear drive motor based on the first determination result, and performing steering angle control on the front wheels and the rear wheels based on the first determination result comprises:
controlling the front drive motor to continuously output a reduced first torque, controlling the rear drive motor to continuously output an increased second torque, and maintaining the steering angles of the front wheels and the rear wheels unchanged in response to the first determination result being that the lateral acceleration reaches the preset acceleration threshold;
adjusting the first torque, the second torque, and the steering angles of the front wheels and the rear wheels until the lateral acceleration reaches the preset acceleration threshold in response to the first determination result being that the lateral acceleration fails to reach the preset acceleration threshold.

4. The control method according to claim 1, wherein the adjusting, based on the magnitude relation, the first torque, the second torque, the steering angle of the front wheels, the steering angle of the rear wheels, and the yaw rate of the vehicle comprises:
increasing the steering angles of the front wheels and the rear wheels, and reducing the first torque and the second torque, until an absolute value of the first longitudinal force is the same as an absolute value of the second longitudinal force, and an absolute value of the first lateral force is the same as an absolute value of the second lateral force in response to the magnitude relation being that the longitudinal acceleration is greater than the preset acceleration threshold and the lateral acceleration reaches the preset acceleration threshold;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

5. The control method according to claim 1, wherein the adjusting, based on the magnitude relation, the first torque, the second torque, the steering angle of the front wheels, the steering angle of the rear wheels, and the yaw rate of the vehicle comprises:
increasing the steering angle of the front wheels and reducing the steering angle of the rear wheels until the longitudinal acceleration reaches the preset acceleration threshold in response to the magnitude relation being that the longitudinal acceleration is greater than the preset acceleration threshold and the lateral acceleration is less than the preset acceleration threshold;
reacquiring the lateral acceleration in response to the longitudinal acceleration reaching the preset acceleration threshold;
determining whether a re-acquired lateral acceleration reaches the preset acceleration threshold to obtain a second determination result;
performing torque control on the front drive motor and the rear drive motor based on the second determination result, and performing steering angle control on the front wheels and the rear wheels based on the second determination result, until an absolute value of the first longitudinal force is the same as an absolute value of the second longitudinal force, and an absolute value of the first lateral force is the same as an absolute value of the second lateral force;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

6. The control method according to claim 5, wherein the performing torque control on the front drive motor and the rear drive motor based on the second determination result, and performing steering angle control on the front wheels and the rear wheels based on the second determination result comprises:
maintaining output torques of the front drive motor and the rear drive motor unchanged, maintaining an increased steering angle of the front wheels unchanged and maintaining a decreased steering angle of the rear wheels unchanged in response to the second determination result being that the lateral acceleration reaches the preset acceleration threshold; and
adjusting the first torque, the second torque, and the steering angles of the front wheels and the rear wheels until the lateral acceleration reaches the preset acceleration threshold in response to the second determination result being that the lateral acceleration fails to reach the preset acceleration threshold.

7. The control method according to claim 1, wherein the adjusting, based on the magnitude relation, the first torque, the second torque, the steering angle of the front wheels, the steering angle of the rear wheels, and the yaw rate of the vehicle comprises:
determining whether the yaw rate reaches a preset angular velocity in response to the magnitude relation being that the longitudinal acceleration reaches the preset acceleration threshold and the lateral acceleration is greater than or less than the preset acceleration threshold; and
if not, reducing the first torque and the second torque based on a preset torque adjustment ratio, and reducing the steering angle of the front wheels and the steering angle of the rear wheels based on a preset steering angle adjustment value in response to the yaw rate being greater than the preset angular velocity; or, increasing the first torque and the second torque based on the preset torque adjustment ratio, and increasing the steering angle of the front wheels and the steering angle of the rear wheels based on the preset steering angle adjustment value in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

8. The control method according to claim 1, wherein the adjusting, based on the magnitude relation, the first torque, the second torque, the steering angle of the front wheels, the steering angle of the rear wheels, and the yaw rate of the vehicle comprises:
determining whether the yaw rate reaches a preset angular velocity in response to the magnitude relation being that both the longitudinal acceleration and the lateral acceleration reach the preset acceleration threshold; and
if yes, maintaining the first torque and the second torque unchanged, and maintaining the steering angles of the front wheels and the rear wheels unchanged;
if not, reducing the first torque and the second torque based on a preset torque adjustment ratio in response to the yaw rate being greater than the preset angular velocity; or, increasing the first torque and the second torque based on the preset torque adjustment ratio in response to the yaw rate being less than the preset angular velocity, until the yaw rate reaches the preset angular velocity, an absolute value of the first longitudinal force is the same as an absolute value of the second longitudinal force, and an absolute value of the first lateral force is the same as an absolute value of the second lateral force.

9. The control method according to claim 1, wherein the adjusting, based on the magnitude relation, the first torque, the second torque, the steering angle of the front wheels, the steering angle of the rear wheels, and the yaw rate of the vehicle comprises:
reducing the steering angle of the front wheel and increasing the steering angle of the rear wheel in response to the magnitude relation being that the longitudinal acceleration is less than the preset acceleration threshold and the lateral acceleration is greater than the preset acceleration threshold;
determining whether an absolute value of the first longitudinal force is the same as an absolute value of the second longitudinal force and an absolute value of the first lateral force is the same as an absolute value of the second lateral force;
if yes, maintaining the respective output torques of the front drive motor and the rear drive motor unchanged, maintaining a reduced steering angle of the front wheel unchanged, and maintaining an increased steering angle of the rear wheels unchanged;
if not, adjusting the first torque, the second torque, and the steering angles of the front wheels and the rear wheels until the absolute value of the first longitudinal force is the same as the absolute value of the second longitudinal force, and the absolute value of the first lateral force is the same as the absolute value of the second lateral force;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

10. The control method according to claim 1, wherein the adjusting, based on the magnitude relation, the first torque, the second torque, the steering angle of the front wheels, the steering angle of the rear wheels, and the yaw rate of the vehicle comprises:
reducing the steering angle of the front wheels and increasing the first torque, or increasing the steering angle of the rear wheels and reducing the second torque until an absolute value of the first longitudinal force is the same as an absolute value of the second longitudinal force, and an absolute value of the first lateral force is the same as an absolute value of the second lateral force in response to the magnitude relation being that the longitudinal acceleration is less than the preset acceleration threshold and the lateral acceleration reaches the preset acceleration threshold;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

11. The control method according to claim 1, wherein the adjusting, based on the magnitude relation, the first torque, the second torque, the steering angle of the front wheels, the steering angle of the rear wheels, and the yaw rate of the vehicle comprises:
increasing the first torque, reducing the steering angle of the front wheels, reducing the second torque, and increasing the steering angle of the rear wheels in response to the magnitude relation being that the longitudinal acceleration is less than the preset acceleration threshold and the lateral acceleration is less than the preset acceleration threshold, until an absolute value of the first longitudinal force is the same as an absolute value of the second longitudinal force, and an absolute value of the first lateral force is the same as an absolute value of the second lateral force;
determining whether the yaw rate reaches a preset angular velocity; and
if not, reducing the first torque and the second torque based on a preset torque adjustment ratio in response to the yaw rate being greater than the preset angular velocity, or, increasing the first torque and the second torque based on the preset torque adjustment ratio in response to the yaw rate being less than the preset angular velocity, until the yaw rate reaches the preset angular velocity.

12. The control method according to any one of claims 1 to 11, wherein the controlling the front wheels and the rear wheels to steer in the same direction to respective target steering angles in response to the in-place steering mode of the vehicle being activated comprises:
acquiring a preset in-place steering direction in response to the in-place steering mode of the vehicle being activated;
acquiring a preset steering angle corresponding to the in-place steering direction to obtain the respective target steering angles for the front wheels and the rear wheels; and
controlling the front wheels and the rear wheels to steer in the same direction to the respective target steering angles.

13. A vehicle, wherein the vehicle comprises:
a memory for storing executable program code;
a processor for calling and running the executable program code from the memory, enabling the vehicle to execute the vehicle control method according to any one of claims 1 to 12.

14. A computer-readable storage medium, wherein the computer-readable storage medium stores a computer program, and when the computer program is executed, the vehicle control method according to any one of claims 1 to 12 is implemented.
